# EUROPEAN PATENT APPLICATION

(11) **EP 4 722 064 A1**
(43) Date of publication of application: **08.04.2026**
(21) Application number: 24815796.8
(22) Date of filing: 24.05.2024
(51) Int. Cl.: B60W 30/09, B60R 21/0134, G01S 13/931, G01S 17/931, G01S 15/931, G08G 1/052

(54) **COLLISION PREVENTION APPARATUS AND COLLISION PREVENTION METHOD**

(30) Priority: 26.05.2023 KR 20230068384
(71) Applicant: Byda Co., Ltd., Seoul 04637 (KR)
(72) Inventor: KIM, Byung Sung, Seoul 04595 (KR); CHOI, Seung Un, Suwon-si, Gyeonggi-do 16452 (KR); PARK, Jong Gyu, Suwon-si, Gyeonggi-do 16978 (KR); PAK, Se Kyung, Suwon-si, Gyeonggi-do 16699 (KR)
(74) Representative: Bryn Aarflot AS
(86) International application number: PCT/KR2024/007040
(87) International publication number: WO 2024/248420

(57) **Abstract**

A collision prevention apparatus and a collision prevention method according to embodiments of the present disclosure can prevent a collision between a driving vehicle and an object on which the collision prevention apparatus is installed by receiving a signal output from an object detection apparatus mounted on a driving vehicle driving on a road, and generating and transmitting a virtual reflection signal different from an actual reflection signal of the received signal on the basis of the received reception signal and a virtual driving speed.

## Description

### [Technical Field]

Embodiments of the disclosure relate to a collision prevention device and a collision prevention method.

### [Background Art]

Recently, with the development of vehicle control technology, cruise control technology such as smart cruise control is being applied to vehicles. Cruise control technology is a function that maintains a vehicle's speed constant without pressing the accelerator pedal or maintains an inter-vehicle distance as set by a driver by detecting a preceding vehicle (vehicle travelling ahead) with a front sensor (object detection device).

Recently, drivers frequently use the cruise control function when driving on roads. However, even though the cruise control function is operating in a vehicle, fatal accidents may occur due to driver drowsiness or failure to pay attention to the front.

### [Detailed Description of the Invention]

### [Technical Problem]

Embodiments of the disclosure may provide a collision prevention device and a collision prevention method that prevent collisions between a traveling vehicle on a road and an object on the road.

Embodiments of the disclosure may provide a collision prevention device and a collision prevention method that may lead to active control of a traveling vehicle on a road so that the traveling vehicle on the road does not collide with an object on the road.

Embodiments of the disclosure may provide a collision prevention device and a collision prevention method that may lead to active control of a traveling vehicle performing cruise control so that the traveling vehicle does not collide with an object stationary on a road.

Embodiments of the disclosure may provide a collision prevention device and a collision prevention method that may be installed on an object stationary on a road to lead to active control of a traveling vehicle so that the traveling vehicle performing cruise control may safely reduce speed or stop by itself.

Embodiments of the disclosure may provide a collision prevention device and a collision prevention method that may lead to active control of a traveling vehicle traveling at high speed so that the traveling vehicle does not collide with a construction vehicle or road installation stationary on a road when the traveling vehicle with cruise control operating is traveling at high speed on the road.

### [Technical Solution]

A collision prevention device (also referred to as a virtual traveling target generation device or virtual target generation device) according to embodiments of the disclosure may include a receiving antenna receiving a signal output from an object detection device mounted on a traveling vehicle traveling on a road, a virtual reflection signal generator generating a virtual reflection signal different from an actual reflection signal of a received signal based on the received signal received through the receiving antenna and a virtual traveling speed, and a transmitting antenna transmitting the virtual reflection signal.

The collision prevention device may be positioned in a stationary state in front of the traveling direction of the traveling vehicle on the road.

The collision prevention device may be installed on an object stationary on the road. For example, the object on which the collision prevention device is installed may be a construction vehicle stationary on the road. For example, the object on which the collision prevention device is installed may be a road installation installed on the road.

The virtual traveling speed may be a preset default speed value or a speed value adaptively set according to an input signal. The input signal is a signal generated by a traffic monitoring radar device included inside or outside the collision prevention device and may include at least one of speed information and distance information of the traveling vehicle. The virtual traveling speed may be equal to or greater than a preset threshold speed value.

The virtual reflection signal generator may include a speed component addition processor adding a speed component value corresponding to the virtual traveling speed to the received signal to generate the virtual reflection signal and a controller controlling the operation of the speed component addition processor.

Alternatively, the virtual reflection signal generator may include a distance component delay processor performing delay processing by a virtual distance component value on the received signal, a speed component addition processor adding a speed component value corresponding to the virtual traveling speed to the signal on which the delay processing has been performed to generate the virtual reflection signal, and a controller controlling the operations of the distance component delay processor and the speed component addition processor.

The traveling vehicle may be a vehicle performing cruise control based on the detection result of the object detection device.

A collision prevention method of a collision prevention device according to embodiments of the disclosure may include a first step of receiving a signal output from an object detection device mounted on a traveling vehicle traveling on a road through a receiving antenna included in the collision prevention device, a second step of the collision prevention device generating a virtual reflection signal different from an actual reflection signal of the received signal based on a received signal received through the receiving antenna and a preset virtual traveling speed, and a third step of transmitting the virtual reflection signal through a transmitting antenna included in the collision prevention device.

### [Advantageous Effects]

According to embodiments of the disclosure, there may be provided a collision prevention device and a collision prevention method that prevent collisions between a traveling vehicle on a road and an object on the road.

According to embodiments of the disclosure, there may be provided a collision prevention device and a collision prevention method that may lead to active control of a traveling vehicle on a road so that the traveling vehicle on the road does not collide with an object on the road.

According to embodiments of the disclosure, there may be provided a collision prevention device and a collision prevention method that may lead to active control of a traveling vehicle performing cruise control so that the traveling vehicle does not collide with an object in a stationary state on a road.

According to embodiments of the disclosure, there may be provided a collision prevention device and a collision prevention method that may be installed on an object in a stationary state on a road to lead to active control of a traveling vehicle so that the traveling vehicle performing cruise control may safely reduce speed or stop by itself.

According to embodiments of the disclosure, there may be provided a collision prevention device and a collision prevention method that may lead to active control of a traveling vehicle traveling at high speed so that the traveling vehicle does not collide with a construction vehicle or road installation stationary on a road when the traveling vehicle with cruise control operating is traveling at high speed on the road.

### [Brief Description of Drawings]

FIG. 1 illustrates a state in which a collision prevention device according to embodiments of the disclosure is installed on an object on a road.
FIG. 2 is a configuration diagram illustrating a collision prevention device according to embodiments of the disclosure.
FIG. 3 is a more detailed configuration diagram illustrating a collision prevention device according to embodiments of the disclosure.
FIG. 4 is a view illustrating a collision prevention operation method when a collision prevention device according to embodiments of the disclosure is installed on a construction vehicle.
FIG. 5 is a view illustrating a collision prevention operation method when a collision prevention device according to embodiments of the disclosure is installed on a road installation.
FIG. 6 illustrates a road with a road work activity zone where a collision prevention device according to embodiments of the disclosure is installed.
FIG. 7 is a flowchart illustrating a collision prevention method according to embodiments of the disclosure.
FIG. 8 is a flowchart illustrating a virtual reflection signal generation step in a collision prevention method according to embodiments of the disclosure.

### [Mode for Carrying out the Invention]

Hereinafter, embodiments of the disclosure are described in detail with reference to the accompanying drawings. In assigning reference numerals to components of each drawing, the same components may be assigned the same numerals even when they are shown on different drawings. When determined to make the subject matter of the disclosure unclear, the details of the known art or functions may be skipped. As used herein, when a component "includes," "has," or "is composed of" another component, the component may add other components unless the component "only" includes, has, or is composed of" the other component. As used herein, the singular forms "a", "an" and "the" are intended to include the plural forms as well, unless the context clearly indicates otherwise.

Such denotations as "first," "second," "A," "B," "(a)," and "(b)," may be used in describing the components of the present invention. These denotations are provided merely to distinguish a component from another, and the essence, order, or number of the components are not limited by the denotations.

In describing the positional relationship between components, when two or more components are described as "connected", "coupled" or "linked", the two or more components may be directly "connected", "coupled" or "linked" ", or another component may intervene. Here, the other component may be included in one or more of the two or more components that are "connected", "coupled" or "linked" to each other.

When such terms as, e.g., "after", "next to", "subsequent to", and "before", are used to describe the temporal flow relationship related to components, operation methods, and fabricating methods, it may include a non-continuous relationship unless the term "immediately" or "directly" is used.

When a component is designated with a value or its corresponding information (e.g., level), the value or the corresponding information may be interpreted as including a tolerance that may arise due to various factors (e.g., process factors, internal or external impacts, or noise).

Hereinafter, various embodiments of the present disclosure are described in detail with reference to the accompanying drawings.

Cruise control technology such as smart cruise control is a function that maintains a vehicle's speed constant without pressing the accelerator pedal or maintains an inter-vehicle distance as set by a driver by detecting a preceding vehicle (vehicle travelling ahead) with a front sensor (object detection device).

In other words, cruise control technology such as smart cruise control may detect an object (preceding vehicle) in the traveling direction of the host vehicle through an object detection device such as a 77GHz radar mounted on the front grille of the vehicle and control while maintaining a predetermined distance from the detected preceding vehicle.

In the case of radar among object detection devices, it may transmit and receive electromagnetic waves to obtain distance, speed, and direction information for multiple objects in front. To detect and distinguish multiple vehicles and pedestrians among various road environments and clutter noises (road surfaces, structures, etc.) with radar, distance, speed, and direction information should be utilized.

Due to various road environments and vertical movements of vehicles, it may be difficult to distinguish between stationary objects on road lanes and signs and structures. Accordingly, there is a restriction that only moving objects may be recognized as vehicles when initially detected by radar. In other words, during cruise control operation, when initially detected by radar, braking control operation may be performed by recognizing only moving objects (vehicles) as forward vehicles.

During cruise control operation, when there is a stationary object in front, malfunction may occur. Due to the limitations of the cruise control function, stationary targets are ignored when initially detected by radar in driving circumstances above a predetermined speed (e.g., 50km/h). Recently, stationary vehicles may be recognized with a front camera, but due to the operational limitations of the camera, it only operates at predetermined speeds (e.g., below 50KM/H). Further, there is a possibility of camera image non-detection due to various appearances of road construction vehicles.

However, recently, cruise control driving is mainly used while driving at high speeds above a predetermined speed (e.g., 50Km/h). However, most fatal accidents occur on automobile-only roads (highways, etc.) due to driver drowsiness or failure to pay attention to the front.

The inventors of the disclosure have discovered that during vehicle driving using cruise control such as smart cruise control, when there is a stationary object (e.g., stationary vehicle, road installation, etc.) in front, speed reduction of the vehicle performing cruise control may not occur, resulting in a collision accident between the vehicle performing cruise control and the stationary object in front.

Accordingly, embodiments of the disclosure may provide a collision prevention device and a collision prevention method that lead a traveling vehicle operating cruise control (cruise control operating vehicle) to reduce speed and stop by itself even when there is a stationary object in front.

A collision prevention device according to embodiments of the disclosure may be installed on an object existing in a stationary state in front of a cruise control operating vehicle.

A collision prevention device according to embodiments of the disclosure may generate and transmit a virtual reflection signal so that a cruise control operating vehicle may set a virtual following target that does not actually are present. Accordingly, a collision prevention device according to embodiments of the disclosure may also be referred to as a virtual following target generation device.

Hereinafter, a collision prevention device and a collision prevention method according to embodiments of the disclosure are described in detail.

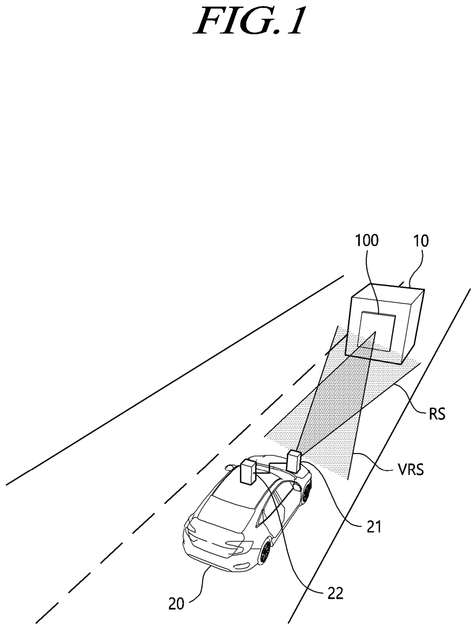

FIG. 1 illustrates a state in which a collision prevention device 100 according to embodiments of the disclosure is installed on an object 10 on a road.

Referring to FIG. 1, an object detection device 21 and a cruise control system 22 may be mounted on a traveling vehicle 20 traveling on a road.

The cruise control system 22 may perform cruise control based on the detection result of the object detection device 21.

Here, cruise control may include control that maintains vehicle speed constant at a speed preset by a driver, may include control that controls the interval with a forward vehicle using an acceleration/deceleration device of the vehicle to enable constant operation following a preceding vehicle in a low-speed driving state such as in congested traffic conditions, and may include various intelligent cruise controls. Cruise control may include adaptive cruise control (ACC) or smart cruise control (SCC), and may further include inter-vehicle maintenance control technology including stop and go control.

Referring to FIG. 1, the collision prevention device 100 according to embodiments of the disclosure is installed on the object 10 on the road and may prevent the traveling vehicle 20 traveling on the road from colliding with the object 10.

The collision prevention device 100 may be installed on an object 10 stationary on the road.

The object 10 on which the collision prevention device 100 is installed may be positioned in a stationary state in front of the traveling direction of the traveling vehicle 20 on the road. In other words, the collision prevention device 100 installed on the object 10 may be positioned in a stationary state in front of the traveling direction of the traveling vehicle 20 on the road.

The stationary state of the object 10 may be a state in which the speed of the object 10 is zero. More comprehensively, the stationary state of the object 10 may be a state in which the speed of the object 10 is less than a threshold speed. For example, the threshold speed may be 5km per hour. Alternatively, the threshold speed may be a value of 5km per hour or less.

The object 10 on which the collision prevention device 100 is installed may be an object that is actually in a stationary state on a road or moving at a speed below a speed determined as a stationary state by the cruise control system 22 (hereinafter also referred to as "stationary object" or "stationary vehicle"). Here, the speed determined as a stationary state by the cruise control system 22 may be, e.g., a speed slower than 5km/h.

For example, the stationary vehicle may be a construction vehicle performing road work.

For example, the stationary object may be a road installation.

For example, the road installation may be temporarily installed on a road for road work and may include one or more of a traffic cone, various types of barriers, etc. As another example, the road installation may include various road structures installed in the traveling direction even when not related to road work.

The collision prevention device 100 installed on the object 10 may be positioned in a stationary state in front of the traveling direction of the traveling vehicle 20 on the road.

The collision prevention device 100 according to embodiments of the disclosure may receive a signal (RS) transmitted from the object detection device 21 of the traveling vehicle 20 and generate and transmit a "virtual reflection signal (VRS)" so that the traveling vehicle 20 may set a "following target (following preceding vehicle)" traveling in front of the traveling vehicle 20.

Accordingly, the cruise control system 22 of the traveling vehicle 20 may set a following target based on the result of detecting the virtual reflection signal (VRS) by the object detection device 21 and perform cruise control following the following target.

The cruise control system 22 of the traveling vehicle 20 may prevent collision with the stationary object 10 by performing cruise control to gradually reduce speed.

The virtual reflection signal (VRS) may be a fake reflection signal different from a signal (actual reflection signal) in which the signal (RS) transmitted from the object detection device 21 is actually reflected from the object 10 or the collision prevention device 100.

The virtual reflection signal (VRS) may be a signal for leading to active control (speed reduction control) of the traveling vehicle 20 to prevent collision between the traveling vehicle 20 and the object 10 on which the collision prevention device 100 is installed.

The virtual reflection signal (VRS) may be a signal that causes the object detection device 21 of the traveling vehicle 20 to recognize the object 10 on which the collision prevention device 100 is installed as a preceding vehicle traveling at low speed.

The virtual reflection signal (VRS) may be a signal that leads the cruise control system 22 of the traveling vehicle 20 to recognize a following target (following preceding vehicle) to perform cruise control.

For example, the object detection device 21 of the traveling vehicle 20 may include one or more of a radar (Radio Detecting and Ranging) sensor, a lidar (Light Detection And Ranging) sensor, and a ultrasonic sensor.

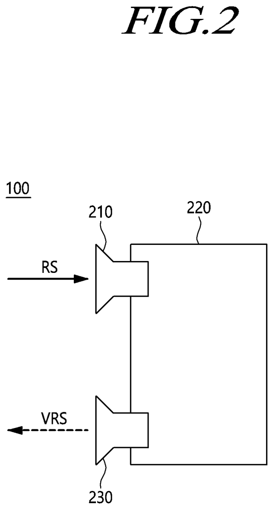

FIG. 2 is a configuration diagram illustrating a collision prevention device 100 according to embodiments of the disclosure.

Referring to FIG. 2, a collision prevention device 100 according to embodiments of the disclosure may include a receiving antenna 210, a virtual reflection signal generator 220, and a transmitting antenna 230.

The receiving antenna 210 may receive a signal (RS) transmitted from the object detection device 21 of the traveling vehicle 20.

The virtual reflection signal generator 220 may generate a virtual reflection signal (VRS) different from an actual reflection signal of the received signal (RS) based on the received signal (RS) received through the receiving antenna 210 and a virtual traveling speed.

The transmitting antenna 230 may transmit the virtual reflection signal (VRS).

The virtual reflection signal (VRS) may be a signal for leading to active control (speed reduction control) of the traveling vehicle 20 to prevent collision between the traveling vehicle 20 and the object 10 on which the collision prevention device 100 is installed.

The virtual reflection signal (VRS) may be a signal that causes the object detection device 21 of the traveling vehicle 20 to recognize the object 10 on which the collision prevention device 100 is installed as a preceding vehicle traveling at low speed.

The virtual reflection signal (VRS) may be a signal that leads the cruise control system 22 of the traveling vehicle 20 to recognize a following target (following preceding vehicle) to perform cruise control.

The virtual traveling speed may be a preset default speed value or a speed value adaptively set according to an input signal. Here, the input signal is a signal generated by a traffic monitoring device included inside or outside the collision prevention device 100 and may include speed and/or distance information of the traveling vehicle 20.

For example, the traffic monitoring device may include one or more of a radar, a camera, and a lidar.

The virtual traveling speed may be equal to or greater than a preset threshold speed value. For example, the threshold speed value may be 5km per hour.

As the separation distance between the traveling vehicle 20 and the object 10 decreases, the virtual traveling speed may decrease.

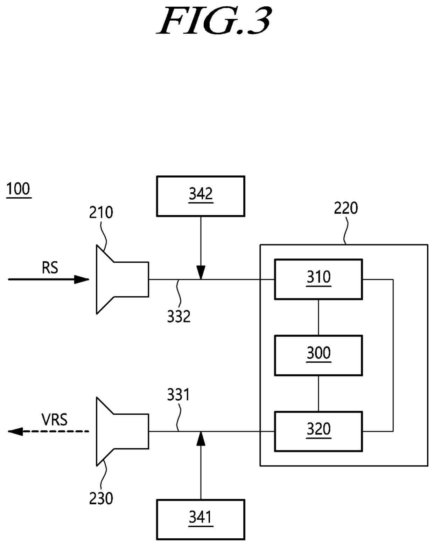

FIG. 3 is a more detailed configuration diagram illustrating a collision prevention device 100 according to embodiments of the disclosure.

Referring to FIG. 3, the virtual reflection signal generator 220 included in the collision prevention device 100 according to embodiments of the disclosure may include a speed component addition processor 320 and a controller 300.

The virtual reflection signal generator 220 may generate a virtual reflection signal using a speed component.

In this case, the virtual reflection signal generator 220 may include a speed component addition processor 320 that adds a speed component value corresponding to the virtual traveling speed to the received signal to generate the virtual reflection signal and a controller 300 that controls the operation of the speed component addition processor 320.

Meanwhile, the virtual reflection signal generator 220 may generate a virtual reflection signal using a distance component together with the speed component. In this case, referring to FIG. 3, the virtual reflection signal generator 220 included in the collision prevention device 100 according to embodiments of the disclosure may include a distance component delay processor 310, a speed component addition processor 320, and a controller 300.

The distance component delay processor 310 may perform delay processing by a virtual distance component value on the received signal (RS). The speed component addition processor 320 may add a speed component value corresponding to the virtual traveling speed to the signal on which delay processing has been performed by the distance component delay processor 310 to generate the virtual reflection signal (VRS).

The controller 300 may control the operations of the distance component delay processor and the speed component addition processor.

The virtual reflection signal generator 220 may include a receiving-side mixer, a receiving-side oscillator, a receiving-side phase-locked loop, a filter, a receiving-side attenuator, a virtual distance component delayer, etc. The virtual reflection signal generator 220 may further include a transmitting-side attenuator, a transmitting-side phase-locked loop, a transmitting-side oscillator, a transmitting-side mixer, etc.

The signal (RS) received through the receiving antenna 210 may be input to the receiving-side mixer. The virtual reflection signal (VRS) may be output from the transmitting-side mixer and transmitted through the transmitting antenna 230.

By the receiving-side attenuator and the virtual distance component delayer, the received signal (RS) may be delayed by a distance component for a desired virtual target. For example, the virtual component delayer may convert electromagnetic waves to an optical axis and convert length (distance component) by combining optical cables and optical switches.

The transmitting-side oscillator may input a signal with added or subtracted frequency of the virtual speed component to the transmitting-side mixer.

Referring to FIG. 3, the collision prevention device 100 according to embodiments of the disclosure may further include at least one first transmission line 331 for transferring the virtual reflection signal (VRS) from the virtual reflection signal generator 220 to the transmitting antenna 230.

According to the collision prevention device according to embodiments of the disclosure, a time delay for the virtual reflection signal (VRS) may be generated through the at least one first transmission line 331.

Referring to FIG. 3, the collision prevention device 100 according to embodiments of the disclosure may further include a first signal strength adjuster 341 that amplifies or attenuates the signal strength of the virtual reflection signal (VRS) on the at least one first transmission line 331. Here, the first signal strength adjuster 341 may include at least one of an amplifier and an attenuator.

Referring to FIG. 3, the collision prevention device 100 according to embodiments of the disclosure may further include at least one second transmission line 332 for transferring the received signal (RS) received through the receiving antenna 210 from the receiving antenna 210 to the virtual reflection signal generator 220.

According to the collision prevention device according to embodiments of the disclosure, a time delay for the received signal (RS) may be generated through the at least one second transmission line 332.

Referring to FIG. 3, the collision prevention device 100 according to embodiments of the disclosure may further include a second signal strength adjuster 342 that amplifies or attenuates the signal strength of the received signal (RS) on the at least one second transmission line 332. Here, the second signal strength adjuster 342 may include at least one of an amplifier and an attenuator.

The collision prevention device 100 according to embodiments of the disclosure may include only at least one first transmission line 331, only at least one second transmission line 332, or both at least one first transmission line 331 and at least one second transmission line 332.

Accordingly, the collision prevention device 100 according to embodiments of the disclosure may include only the first signal strength adjuster 341, only the second signal strength adjuster 342, or both the first signal strength adjuster 341 and the second signal strength adjuster 342.

According to the above, the time delay of the virtual reflection signal (VRS) may be controlled, so that the collision prevention device 100 may more precisely prevent the traveling vehicle 20 approaching the object on which the collision prevention device 100 is installed from colliding with the object.

In other words, through time delay control of the virtual reflection signal (VRS), the object detection device 21 of the traveling vehicle 20 approaching the object on which the collision prevention device 100 is installed may detect objects having various speeds or various separation distances (distance between the collision prevention device 100 and the traveling vehicle 20). As an example, the object on which the collision prevention device 100 is installed is actually an object or vehicle stationary on a road, but may be detected by the object detection device 21 of the traveling vehicle 20 as a vehicle (e.g., following vehicle), object, or pedestrian moving on the road. As another example, the object on which the collision prevention device 100 is installed is actually an object or vehicle moving on a road, but may be detected by the object detection device 21 of the traveling vehicle 20 as a vehicle (e.g., following vehicle), object, or pedestrian moving on the road at a speed different from the real speed.

According to the collision prevention device 100 according to embodiments of the disclosure, the virtual reflection signal generator 220 may adjust the signal strength of at least one of the received signal (RS) received through the receiving antenna 210 and the virtual reflection signal (VRS) generated by the virtual reflection signal generator 220.

According to the collision prevention device 100 according to embodiments of the disclosure, when the signal strength of at least one of the received signal (RS) received through the receiving antenna 210 and the virtual reflection signal (VRS) generated by the virtual reflection signal generator 220 exceeds a predefined threshold, the virtual reflection signal generator 220 may limit the signal strength of at least one of the received signal (RS) received through the receiving antenna 210 and the virtual reflection signal (VRS) generated by the virtual reflection signal generator 220 to below the threshold.

According to the above, through control of signal strength, the collision prevention device 100 may further enhance the performance of collision prevention control that prevents the traveling vehicle 20 approaching the object on which the collision prevention device 100 is installed from colliding with the object and reduce control errors.

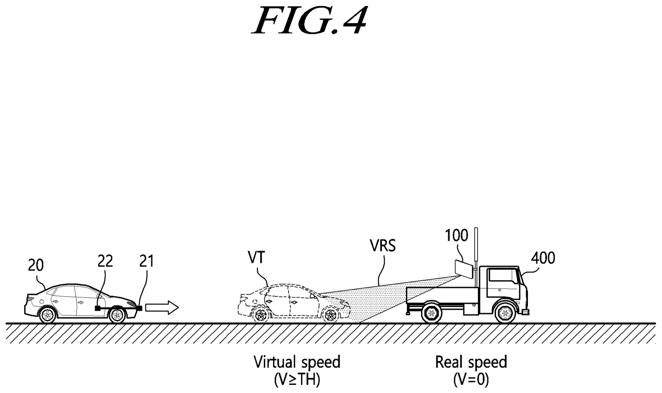

FIG. 4 is a view illustrating a collision prevention operation method when the collision prevention device 100 according to embodiments of the disclosure is installed on a construction vehicle 400.

Referring to FIG. 4, the object 10 on which the collision prevention device 100 is installed may be a construction vehicle 400 that is actually in a stationary state on a road or moving at a speed below a speed determined as a stationary state by the cruise control system 22. The collision prevention device 100 is installed on the construction vehicle 400 stationary on the road due to road work.

The collision prevention device 100 installed on the construction vehicle 400 may generate and transmit a virtual reflection signal (VRS) for leading to active control of the cruise control system 22 of the traveling vehicle 20. In embodiments of the disclosure, generating the virtual reflection signal (VRS) may have the same meaning as generating a virtual following target.

The object detection device 21 of the traveling vehicle 20 may receive the virtual reflection signal (VRS) and, based on the virtual reflection signal (VRS), recognize that there is a vehicle traveling in front (preceding vehicle, following target) as a result of object detection.

The preceding vehicle recognized by the object detection device 21 of the traveling vehicle 20 is actually a non-existent virtual vehicle and may be a virtual vehicle generated by the virtual reflection signal (VRS) of the collision prevention device 100.

The cruise control system 22 of the traveling vehicle 20 may set the preceding vehicle recognized by the object detection device 21 as a virtual following target (VT) and control the behavior of the traveling vehicle 20 so that the traveling vehicle 20 follows the virtual following target (VT).

The construction vehicle 400 is an actually existing vehicle, and the real speed of the construction vehicle 400 is zero. In contrast, the virtual speed of the preceding vehicle, which is the virtual following target (VT) generated by the collision prevention device 100, may be equal to or greater than the threshold speed (TH). For example, the threshold speed (TH) may be 5km per hour, etc. For example, the threshold speed (TH) may be the minimum speed where the cruise control system 22 may recognize that the collision prevention device 100 is moving. For example, the threshold speed (TH) may be a speed faster than the speed determined as a stationary state by the cruise control system 22.

The cruise control system 22 of the traveling vehicle 20 may control the traveling vehicle 20 to follow the virtual following target (VT) recognized as traveling at or above the threshold speed.

Through control of the transmitted virtual reflection signal (VRS), the collision prevention device 100 may cause the cruise control system 22 of the traveling vehicle 20 to recognize the speed reduction of the virtual following target (VT) and control to reduce the speed of the traveling vehicle 20.

Alternatively, through control of the transmitted virtual reflection signal (VRS), the collision prevention device 100 may cause the cruise control system 22 of the traveling vehicle 20 to recognize the speed reduction and stop of the virtual following target (VT) and control to reduce the speed and stop the traveling vehicle 20.

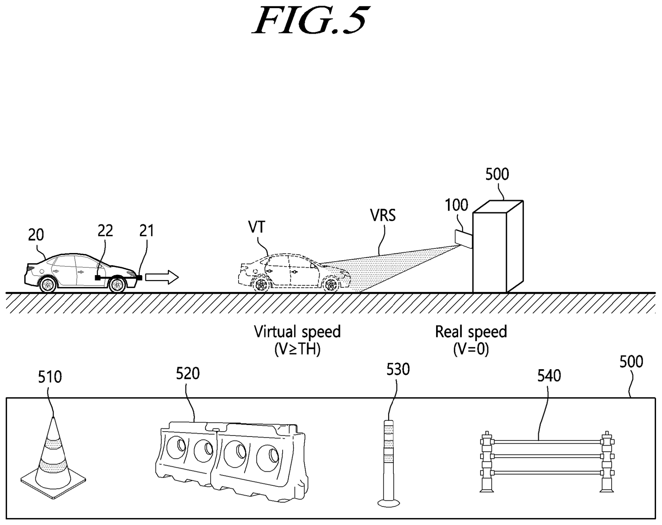

FIG. 5 is a view illustrating a collision prevention operation method when the collision prevention device 100 according to embodiments of the disclosure is installed on a road installation 500.

Referring to FIG. 5, the object 10 on which the collision prevention device 100 is installed may be a road installation 500 installed on a road. The collision prevention device 100 is installed on the road installation 500 installed in a stationary state on the road due to road work.

Referring to FIG. 5, e.g., the road installation 500 may include at least one of a traffic cone 510 and various types of barriers 520, 530, 540, etc.

The collision prevention device 100 installed on the road installation 500 may generate and transmit a virtual reflection signal (VRS) for leading to active control of the cruise control system 22 of the traveling vehicle 20. In embodiments of the disclosure, generating the virtual reflection signal (VRS) may have the same meaning as generating a virtual following target.

The object detection device 21 of the traveling vehicle 20 may receive the virtual reflection signal (VRS) and, based on the virtual reflection signal (VRS), recognize that there is a vehicle traveling in front (preceding vehicle, following target) as a result of object detection.

The preceding vehicle recognized by the object detection device 21 of the traveling vehicle 20 is actually a non-existent virtual vehicle and may be a virtual vehicle generated by the virtual reflection signal (VRS) of the collision prevention device 100.

The cruise control system 22 of the traveling vehicle 20 may set the preceding vehicle recognized by the object detection device 21 as a virtual following target (VT) and control the behavior of the traveling vehicle 20 so that the traveling vehicle 20 follows the virtual following target (VT).

The road installation 500 is an actual object installed on the road, and its real speed is zero. In contrast, the virtual speed of the preceding vehicle, which is the virtual following target (VT) generated by the collision prevention device 100, may be equal to or greater than the threshold speed (TH). For example, the threshold speed (TH) may be 5km per hour, etc.

The cruise control system 22 of the traveling vehicle 20 may control the traveling vehicle 20 to follow the virtual following target (VT) recognized as traveling at or above the threshold speed.

Through control of the transmitted virtual reflection signal (VRS), the collision prevention device 100 may cause the cruise control system 22 of the traveling vehicle 20 to recognize the speed reduction of the virtual following target (VT) and control to reduce the speed of the traveling vehicle 20.

Alternatively, through control of the transmitted virtual reflection signal (VRS), the collision prevention device 100 may cause the cruise control system 22 of the traveling vehicle 20 to recognize the speed reduction and stop of the virtual following target (VT) and control to reduce the speed and stop the traveling vehicle 20.

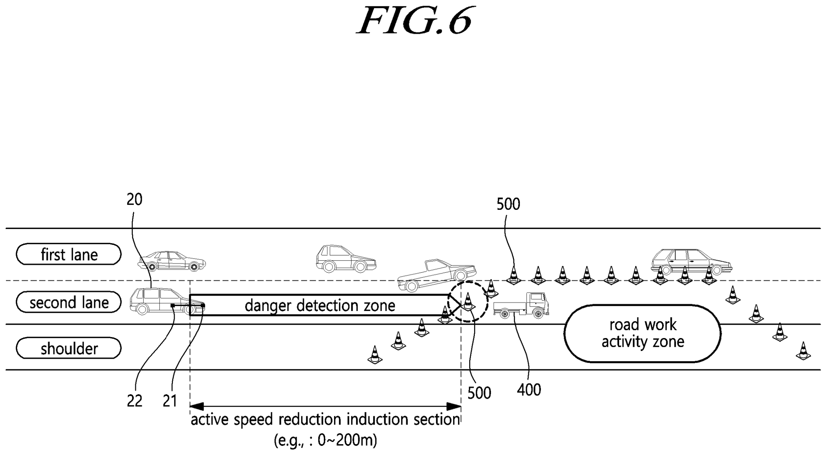

FIG. 6 illustrates a road with a road work activity zone where the collision prevention device 100 according to embodiments of the disclosure is installed.

Referring to FIG. 6, when road work is in progress in some sections of the second lane and shoulder on a road constituted of a first lane, second lane, and shoulder, a plurality of road installations 500 including a plurality of traffic cones may be installed on the periphery of the road work activity zone to guide the road work activity zone. A construction vehicle 400 may be parked within the road work activity zone.

Referring to FIG. 6, the collision prevention device 100 according to embodiments of the disclosure may be installed on the construction vehicle 400. Further, the collision prevention device 100 according to embodiments of the disclosure may be installed on all or some of the plurality of road installations 500.

The collision prevention device 100 installed on all or some of the plurality of road installations 500 or installed on the construction vehicle 400 may detect whether the traveling vehicle 20 enters a preset danger detection zone.

The preset danger detection zone may include an active speed reduction induction section. For example, the active speed reduction induction section may be a section from the position of the collision prevention device 100 to 200m ahead.

When the collision prevention device 100 installed on all or some of the plurality of road installations 500 or installed on the construction vehicle 400 detects that the traveling vehicle 20 has entered the preset danger detection zone, it may output the virtual reflection signal (VRS) through the transmitting antenna 230.

Accordingly, the cruise control system 22 of the traveling vehicle 20 may recognize a following target (VT) traveling at low speed (virtual traveling speed) in front based on the virtual reflection signal (VRS) received through the object detection device 21 and perform cruise control to follow the following target (VT). Here, cruise control may include one or more of acceleration control, deceleration control, steering control, and braking control of the traveling vehicle 20.

The collision prevention device 100 installed on all or some of the plurality of road installations 500 or installed on the construction vehicle 400 may generate and transmit a virtual reflection signal (VRS) changed and set based on a decelerated virtual traveling speed.

Accordingly, the cruise control system 22 of the traveling vehicle 20 may recognize that the speed of the following target (VT) is decreasing and reduce the speed of the traveling vehicle 20, and when necessary, stop the traveling vehicle 20. As a result, the traveling vehicle 20 performing cruise control may safely reduce speed or stop without colliding with the road installation 400 and construction vehicle 500 stationary in the road work activity zone, or may pass by avoiding the road work activity zone.

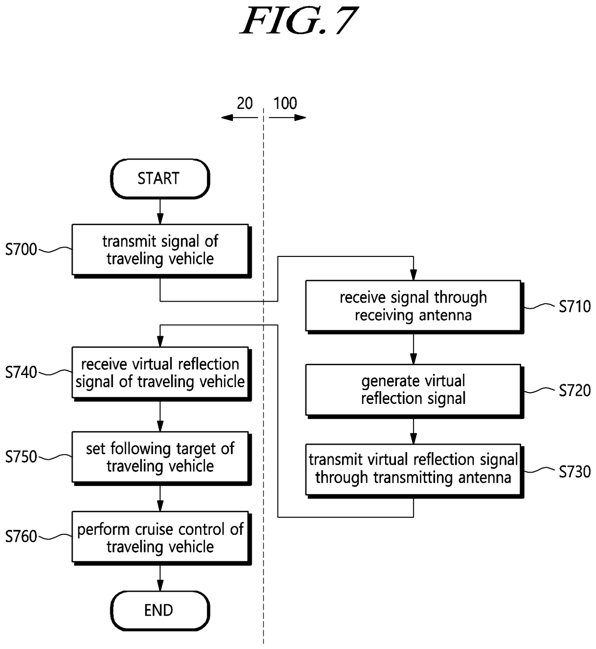

FIG. 7 is a flowchart illustrating a collision prevention method according to embodiments of the disclosure.

Referring to FIG. 7, the collision prevention method of the collision prevention device 100 according to embodiments of the disclosure may include a step (S710) of receiving a signal output from an object detection device 21 mounted on a traveling vehicle 20 traveling on a road through a receiving antenna 210 included in the collision prevention device 100, a step (S720) of the virtual reflection signal generator 220 of the collision prevention device 100 generating a virtual reflection signal (VRS) different from an actual reflection signal of the received signal (RS) based on a received signal (RS) received through the receiving antenna 210 and a preset virtual traveling speed, and a step (S730) of transmitting the virtual reflection signal (VRS) through a transmitting antenna 230 included in the collision prevention device 100.

The virtual reflection signal (VRS) may be a signal for leading to active control (speed reduction control) of the traveling vehicle 20 to prevent collision between the traveling vehicle 20 and the object 10 on which the collision prevention device 100 is installed.

The virtual reflection signal (VRS) may be a signal that causes the object detection device 21 of the traveling vehicle 20 to recognize the object 10 on which the collision prevention device 100 is installed as a preceding vehicle traveling at low speed.

The virtual reflection signal (VRS) may be a signal that leads the cruise control system 22 of the traveling vehicle 20 to recognize a following target (following preceding vehicle) to perform cruise control.

The traveling vehicle 20 may be a vehicle performing cruise control based on the detection result of the object detection device 21.

The collision prevention device 100 may be positioned in a stationary state in front of the traveling direction of the traveling vehicle 20 on the road.

The collision prevention device 100 may be installed on an object 10 stationary on the road.

The object 10 on which the collision prevention device 100 is installed may be a construction vehicle 400 stationary on the road.

The object 10 on which the collision prevention device 100 is installed may be a road installation 500 installed on the road.

The virtual traveling speed may be a preset default speed value or a speed value adaptively set according to an input signal. The virtual traveling speed may be equal to or greater than a preset threshold speed value.

Referring to FIG. 7, the object detection device 21 of the traveling vehicle 20 transmits a signal (RS) (S700). When the traveling vehicle 20 comes within a predetermined distance from the collision prevention device 10, the signal (RS) transmitted from the object detection device 21 of the traveling vehicle 20 is received by the receiving antenna 210 of the collision prevention device 100 (S710).

Referring to FIG. 7, after the step (S730) of transmitting the virtual reflection signal (VRS), the method may further include a step (S740) of the object detection device 21 mounted on the traveling vehicle 20 receiving the virtual reflection signal (VRS), a step (S750) of the cruise control system 22 mounted on the traveling vehicle 20 recognizing the collision prevention device 100 as a preceding vehicle traveling on the road and setting a following target using the result of the object detection device 21 detecting the virtual reflection signal (VRS), and a step (S760) of the cruise control system 22 mounted on the traveling vehicle 20 performing cruise control of the traveling vehicle 20 so that the traveling vehicle 20 follows the following target.

By step S760, the speed of the traveling vehicle 20 may be decreased or the traveling vehicle 20 may safely stop. Accordingly, collision of the traveling vehicle 20 performing cruise control with the stationary object 10 may be prevented.

Referring to FIG. 7, at least one of steps S710, S720, and S730 may be performed when the traveling vehicle 20 enters a preset danger detection zone.

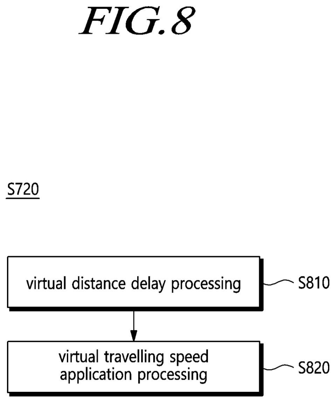

FIG. 8 is a flowchart illustrating a virtual reflection signal generation step in a collision prevention method according to embodiments of the disclosure.

Referring to FIG. 8, when the virtual reflection signal (VRS) is generated using a speed component, the step (S720) of generating the virtual reflection signal (VRS) may include a virtual traveling speed application processing step (S820). For example, when the traveling vehicle 20 is a low-speed vehicle below a predetermined speed, the virtual reflection signal (VRS) may be generated using only the speed component.

Referring to FIG. 8, in some cases, when the virtual reflection signal (VRS) is generated using a distance component together with the speed component, the step (S720) of generating the virtual reflection signal (VRS) may include a virtual distance delay processing step (S810) and a virtual traveling speed application processing step (S820). For example, when the traveling vehicle 20 is a vehicle at or above a predetermined speed, or when more precise performance is required, the virtual reflection signal (VRS) may be generated using the speed component and the distance component.

The virtual distance delay processing performed in the virtual distance delay processing step (S810) may be processing that allows the object detection device 21 of the traveling vehicle 20 to recognize the object 10 as if it were a moving (traveling) vehicle (object) rather than in a stationary state.

The virtual traveling speed application processing performed in the virtual traveling speed application processing step (S820) may be processing that allows the object detection device 21 of the traveling vehicle 20 to recognize the speed of the object 10 as a predetermined value rather than zero.

In the virtual distance delay processing step (S810), the virtual reflection signal generator 220 of the collision prevention device 100 may perform delay processing by a virtual distance component value on the received signal (RS).

In the virtual traveling speed application processing step (S820), the virtual reflection signal generator 220 of the collision prevention device 100 may add a virtual traveling speed component value corresponding to the virtual traveling speed to the signal on which delay processing has been performed to generate the virtual reflection signal (VRS).

The foregoing embodiments are briefly described below.

A collision prevention device (also referred to as a virtual traveling target generation device or virtual target generation device) according to embodiments of the disclosure may include a receiving antenna receiving a signal output from an object detection device mounted on a traveling vehicle traveling on a road, a virtual reflection signal generator generating a virtual reflection signal different from an actual reflection signal of a received signal based on the received signal received through the receiving antenna and a virtual traveling speed, and a transmitting antenna transmitting the virtual reflection signal.

The virtual reflection signal may be a signal for leading to active control of a traveling vehicle to prevent the traveling vehicle from colliding with a stationary vehicle or stationary object on which the collision prevention device is installed.

The virtual reflection signal may be a signal that leads the traveling vehicle to recognize the stationary vehicle or stationary object on which the collision prevention device is installed as a preceding vehicle traveling at low speed.

The virtual reflection signal may be a signal that leads the traveling vehicle to recognize a following target for cruise control.

The collision prevention device may be positioned in a stationary state in front of the traveling direction of the traveling vehicle on the road.

The collision prevention device may be installed on an object stationary on the road.

For example, the object on which the collision prevention device is installed may be a construction vehicle that is in a stationary state on the road or moving at a speed below a speed determined as a stationary state by the cruise control system.

For example, the object on which the collision prevention device is installed may be a road installation installed on the road.

The virtual traveling speed may be a preset default speed value or a speed value adaptively set according to an input signal.

The input signal is a signal generated by a traffic monitoring radar device included inside or outside the collision prevention device and may include at least one of speed information and distance information of the traveling vehicle.

The virtual traveling speed may be equal to or greater than a preset threshold speed value. For example, the threshold speed value may be 5km per hour.

The virtual reflection signal generator may include a speed component addition processor that adds a speed component value corresponding to the virtual traveling speed to the received signal to generate the virtual reflection signal and a controller that controls the operations of the distance component delay processor and the speed component addition processor.

Alternatively, the virtual reflection signal generator may include a distance component delay processor performing delay processing by a virtual distance component value on the received signal, a speed component addition processor adding a speed component value corresponding to the virtual traveling speed to the signal on which the delay processing has been performed to generate the virtual reflection signal, and a controller controlling the operations of the distance component delay processor and the speed component addition processor.

The collision prevention device according to embodiments of the disclosure may further include at least one first transmission line for transferring the virtual reflection signal from the virtual reflection signal generator to the transmitting antenna.

According to the collision prevention device according to embodiments of the disclosure, a time delay for the virtual reflection signal may be generated through the at least one first transmission line.

The collision prevention device according to embodiments of the disclosure may further include a first signal strength adjuster that amplifies or attenuates the signal strength of the virtual reflection signal on the at least one first transmission line.

The collision prevention device according to embodiments of the disclosure may further include at least one second transmission line for transferring the received signal received through the receiving antenna from the receiving antenna to the virtual reflection signal generator.

According to the collision prevention device according to embodiments of the disclosure, a time delay for the received signal may be generated through the at least one second transmission line.

The collision prevention device according to embodiments of the disclosure may further include a second signal strength adjuster that amplifies or attenuates the signal strength of the received signal on the at least one second transmission line.

The transmitting antenna may output the virtual reflection signal when the traveling vehicle enters a preset danger detection zone.

The traveling vehicle may be a vehicle performing cruise control based on the detection result of the object detection device.

As the separation distance between the traveling vehicle and the collision prevention device decreases, the virtual traveling speed may decrease.

According to the collision prevention device according to embodiments of the disclosure, the virtual reflection signal generator may adjust the signal strength of at least one of the received signal received through the receiving antenna and the virtual reflection signal generated by the virtual reflection signal generator.

According to the collision prevention device according to embodiments of the disclosure, when the signal strength of at least one of the received signal received through the receiving antenna and the virtual reflection signal generated by the virtual reflection signal generator exceeds a predefined threshold, the virtual reflection signal generator may limit the signal strength of at least one of the received signal received through the receiving antenna and the virtual reflection signal generated by the virtual reflection signal generator to below the threshold.

A collision prevention method of a collision prevention device according to embodiments of the disclosure may include a first step of receiving a signal output from an object detection device mounted on a traveling vehicle traveling on a road through a receiving antenna included in the collision prevention device, a second step of the collision prevention device generating a virtual reflection signal different from an actual reflection signal of the received signal based on a received signal received through the receiving antenna and a preset virtual traveling speed, and a third step of transmitting the virtual reflection signal through a transmitting antenna included in the collision prevention device.

The virtual reflection signal may be a signal for leading to active control of a traveling vehicle to prevent the traveling vehicle from colliding with a stationary vehicle or stationary object on which the collision prevention device is installed.

The virtual reflection signal may be a signal that leads the traveling vehicle to recognize the stationary vehicle or stationary object on which the collision prevention device is installed as a preceding vehicle traveling at low speed.

It may be a signal that leads the traveling vehicle to recognize a following target for cruise control.

The traveling vehicle may be a vehicle performing cruise control based on the detection result of the object detection device.

The collision prevention device may be positioned in a stationary state in front of the traveling direction of the traveling vehicle on the road.

The collision prevention device may be installed on an object stationary on the road.

The object on which the collision prevention device is installed may be a construction vehicle that is in a stationary state on the road or moving at a speed below a speed determined as a stationary state by the cruise control system.

The object on which the collision prevention device is installed may be a road installation installed on the road.

The virtual traveling speed may be a preset default speed value or a speed value adaptively set according to an input signal.

The virtual traveling speed may be equal to or greater than a preset threshold speed value.

The step of generating the virtual reflection signal may include performing delay processing by a virtual distance component value on the received signal, and adding a virtual traveling speed component value corresponding to the virtual traveling speed to the signal on which delay processing has been performed to generate the virtual reflection signal.

The collision prevention method of the collision prevention device according to embodiments of the disclosure may further include, after the step of transmitting the virtual reflection signal, a step of the object detection device mounted on the traveling vehicle recognizing the collision prevention device as a preceding vehicle traveling on the road and setting a following target, and a step of performing cruise control for the following target.

As the separation distance between the traveling vehicle and the collision prevention device decreases, the virtual traveling speed may decrease.

In the collision prevention method of the collision prevention device according to embodiments of the disclosure described above, at least one of the first step, the second step, and the third step may be performed when the traveling vehicle enters a preset danger detection zone.

According to embodiments of the disclosure, there may be provided a collision prevention device and a collision prevention method that prevent collisions between a traveling vehicle on a road and an object on the road.

According to embodiments of the disclosure, there may be provided a collision prevention device and a collision prevention method that may lead to active control of a traveling vehicle on a road so that the traveling vehicle on the road does not collide with an object on the road.

According to embodiments of the disclosure, there may be provided a collision prevention device and a collision prevention method that may lead to active control of a traveling vehicle performing cruise control so that the traveling vehicle does not collide with an object in a stationary state on a road.

According to embodiments of the disclosure, there may be provided a collision prevention device and a collision prevention method that may be installed on an object in a stationary state on a road to lead to active control of a traveling vehicle so that the traveling vehicle performing cruise control may safely reduce speed or stop by itself.

According to embodiments of the disclosure, there may be provided a collision prevention device and a collision prevention method that may lead to active control of a traveling vehicle traveling at high speed so that the traveling vehicle does not collide with a construction vehicle or road installation stationary on a road when the traveling vehicle with cruise control operating is traveling at high speed on the road.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments.

### [Legend of reference numbers]

| | | | |
|---|---|---|---|
| 10: | object | 20: | traveling vehicle |
| 21: | object detection device | 22: | cruise control system |
| 100: | collision prevention device | 210: | receiving antenna |
| 220: | virtual reflection signal generator | 230: | transmitting antenna |
| 310: | distance component delay processor | 320: | speed component addition processor |
| 330: | controller | 400: | construction vehicle |
| 500: | road installation | 510: | traffic cone |
| 520, 530, 540: | barrier | | |

### CROSS-REFERENCE TO RELATED APPLICATION

The instant patent application claims priority under 35 U.S.C. 119(a) to Korean Patent Application No. 10-2023-0068384, filed on May 26, 2023, in the Korean Intellectual Property Office, the disclosure of which is herein incorporated by reference in its entirety. The present patent application claims priority to other applications to be filed in other countries, the disclosures of which are also incorporated by reference herein in their entireties.

## Claims

1. A collision prevention device comprising:
a receiving antenna receiving a signal output from an object detection device mounted on a traveling vehicle traveling on a road;
a virtual reflection signal generator generating a virtual reflection signal different from an actual reflection signal of a received signal based on the received signal received through the reception antenna and a virtual traveling speed; and
a transmitting antenna transmitting the virtual reflection signal.

2. The collision prevention device of claim 1, wherein the collision prevention device is positioned in a stationary state in front of a traveling direction of the traveling vehicle on the road.

3. The collision prevention device of claim 1, wherein the collision prevention device is installed on an object stationary on the road.

4. The collision prevention device of claim 3, wherein the object on which the collision prevention device is installed is a construction vehicle that is in a stationary state on the road or moving at a speed below a speed determined as a stationary state by a cruise control system.

5. The collision prevention device of claim 3, wherein the object on which the collision prevention device is installed is a road installation installed on the road.

6. The collision prevention device of claim 1, wherein the virtual traveling speed is a preset default speed value or a speed value adaptively set according to an input signal, wherein the input signal is a signal generated by a traffic monitoring device included inside or outside the collision prevention device and includes at least one of speed information and distance information of the traveling vehicle, and wherein the virtual traveling speed is equal to or greater than a preset threshold speed value.

7. The collision prevention device of claim 1, wherein the virtual reflection signal generator includes:
a speed component addition processor adding a speed component value corresponding to the virtual traveling speed to the received signal to generate the virtual reflection signal; and
a controller controlling an operation of the speed component addition processor.

8. The collision prevention device of claim 1, wherein the virtual reflection signal generator includes:
a distance component delay processor performing delay processing by a virtual distance component value on the received signal;
a speed component addition processor adding a speed component value corresponding to the virtual traveling speed to the signal on which the delay processing has been performed to generate the virtual reflection signal; and
a controller controlling operations of the distance component delay processor and the speed component addition processor.

9. The collision prevention device of claim 1, further comprising at least one first transmission line for transferring the virtual reflection signal from the virtual reflection signal generator to the transmitting antenna, wherein a time delay for the virtual reflection signal is generated through the at least one first transmission line.

10. The collision prevention device of claim 9, further comprising a first signal strength adjuster amplifying or attenuating a signal strength of the virtual reflection signal on the at least one first transmission line.

11. The collision prevention device of claim 1, further comprising at least one second transmission line for transferring the received signal from the receiving antenna to the virtual reflection signal generator, wherein a time delay for the received signal is generated through the at least one second transmission line.

12. The collision prevention device of claim 11, further comprising a second signal strength adjuster amplifying or attenuating a signal strength of the received signal on the at least one second transmission line.

13. The collision prevention device of claim 1, wherein the transmitting antenna outputs the virtual reflection signal when the traveling vehicle enters a preset danger detection zone.

14. The collision prevention device of claim 1, wherein the traveling vehicle is a vehicle performing cruise control based on a detection result of the object detection device.

15. The collision prevention device of claim 1, wherein as a separation distance between the traveling vehicle and the collision prevention device decreases, the virtual traveling speed decreases.

16. The collision prevention device of claim 1, wherein the virtual reflection signal generator adjusts a signal strength of at least one of the received signal and the virtual reflection signal.

17. The collision prevention device of claim 16, wherein the virtual reflection signal generator,
when the signal strength of at least one of the received signal and the virtual reflection signal exceeds a predefined threshold, limits the signal strength of at least one of the received signal and the virtual reflection signal to below the threshold.

18. A collision prevention method of a collision prevention device, comprising:
a first step of receiving a signal output from an object detection device mounted on a traveling vehicle traveling on a road through a receiving antenna included in the collision prevention device;
a second step of the collision prevention device generating a virtual reflection signal different from an actual reflection signal of the received signal based on a received signal received through the receiving antenna and a preset virtual traveling speed; and
a third step of transmitting the virtual reflection signal through a transmitting antenna included in the collision prevention device.

19. The collision prevention method of claim 18, wherein the collision prevention device is positioned in a stationary state in front of a traveling direction of the traveling vehicle on the road.

20. The collision prevention method of claim 18, wherein an object on which the collision prevention device is installed is a construction vehicle that is in a stationary state on the road or moving at a speed below a speed determined as a stationary state by a cruise control system.

21. The collision prevention method of claim 18, wherein an object on which the collision prevention device is installed is a road installation installed on the road.

22. The collision prevention method of claim 18, wherein the virtual traveling speed is a preset default speed value or a speed value adaptively set according to an input signal, the input signal is a signal generated by a traffic monitoring device included inside or outside the collision prevention device and includes at least one of speed information and distance information of the traveling vehicle, and the virtual traveling speed is equal to or greater than a preset threshold speed value.

23. The collision prevention method of claim 18, wherein the second step includes adding a virtual traveling speed component value corresponding to the virtual traveling speed to the received signal to generate the virtual reflection signal.

24. The collision prevention method of claim 18, wherein the second step includes:
performing delay processing by a virtual distance component value on the received signal;
and
adding a virtual traveling speed component value corresponding to the virtual traveling speed to the signal on which the delay processing has been performed to generate the virtual reflection signal.

25. The collision prevention method of claim 18, wherein as a separation distance between the traveling vehicle and the collision prevention device decreases, the virtual traveling speed decreases.

26. The collision prevention method of claim 18, wherein at least one of the first step, the second step, and the third step is performed when the traveling vehicle enters a preset danger detection zone.
